# EUROPEAN PATENT SPECIFICATION

(11) **EP 3 812 066 B1**
(45) Date of publication and mention of the grant of the patent: **07.10.2026**
(21) Application number: 19204738.9
(22) Date of filing: 23.10.2019
(51) Int. Cl.: B23B 29/04, B23B 29/10, B23B 25/06, B23B 29/08, B23B 29/20

(54) **TOOL POST AND MACHINING METHOD**
WERKZEUGHALTER UND BEARBEITUNGSVERFAHREN
PORTE-OUTIL ET PROCÉDÉ D'USINAGE

(43) Date of publication of application: 28.04.2021
(73) Proprietor: AB Sandvik Coromant, 811 81 Sandviken (SE)
(72) Inventor: VALIQUETTE, Michael, Elk River, Minnesota 55 330 (US); JANSSON, Per-Olof, 748 93 Österbybruk (SE)
(74) Representative: Sandvik

(56) References cited:
- EP-A1- 3 246 125
- EP-A1- 3 357 613
- CN-A- 108 480 669
- US-A- 3 815 928
- US-A- 5 720 090
- US-A1- 2005 129 471
- US-A1- 2014 126 969
- US-A1- 2017 197 252

## Description

### TECHNICAL FIELD OF THE INVENTION

The present invention belongs to the technical field of metal cutting. More specifically the present invention belongs to a tool holder and a parting and grooving tool for an indexable turret according to the preamble of claim 1. An example of such a tool holder and tool is disclosed by EP 3357613 A1.

### BACKGROUND OF THE INVENTION AND PRIOR ART

The present invention relates to a tool holder and a parting and grooving tool for an indexable turret. Many modern CNC-machines or CNC-lathes comprise an indexable turret. Such turret comprise a plurality of tool stations. Normally, different types of cutting tools are connected directly or indirectly, e.g. by a clamping unit or tool holder, to said tool stations. When changing from one type of cutting tool to another, the turret rotates such that another cutting tool is positioned in an active position, i.e. is positioned towards a metal work piece to be machined.

US4018112A discloses a grooving tool for a turret. The grooving tool is connected to a tool station. The grooving depth is limited for the disclosed grooving tool.

The inventors have found that there is a need for parting and/or grooving at greater grooving depth for a CNC-machine equipped with one or more turrets.

### SUMMARY OF THE INVENTION

It is an object of the invention to provide a tool holder and a parting and grooving tool for a CNC-lathe comprising a turret, which has a reduced risk of vibrations during cutting.

It is a further object to provide a tool holder and a parting and grooving tool for a CNC-lathe comprising a turret, which is relatively small and light, and/or which does not extend further than necessary from a turret axis, thereby reducing the risk of collision.

At least one of said objects is achieved by a tool holder and a parting and grooving tool for an indexable turret having a plurality of tool stations, where adjacent tool stations having a predetermined angular spacing, the tool holder comprising:
a mounting portion and a projected portion,
wherein the mounting portion comprises a flat surface defining an interface plane,
wherein the projected portion comprises a recess for holding the parting and grooving tool,
wherein the projected portion and the mounting portion are connected to each other,
wherein the parting and grooving tool comprises:
   a cutting portion and a clamping portion,
   wherein the cutting portion comprises a parting and grooving insert comprising a cutting edge,
   wherein the clamping portion comprises a rear end surface,
   wherein the parting and grooving tool is mountable in the recess such that a distance from the interface plane to the rear end surface of the parting and grooving tool is greater than a distance from the interface plane to the cutting portion of the parting and grooving tool.

By such a tool holder and a parting and grooving tool, the tool holder can be mounted to an adjacent tool station in relation to a tool station which is in an active position. A tool station which is in an active position is a tool station which is between a turret axis and a rotational axis of the metal work piece to be machined.

The tool holder, or tool block, is preferably in the form of a machine adapted clamping unit. The tool holder and the parting and grooving tool may be designated as a tool unit.

The tool holder holds the parting and grooving tool and connects it to a tool station.

The parting and grooving tool is a turning tool. The parting and grooving tool may be in the form of e.g. a parting and blade or a shank tool, and a parting and grooving insert.

The parting and grooving tool comprises a cutting portion, i.e. a cutting end or a free end, and a clamping portion, i.e. a clamping end or holding portion or holding end.

The cutting edge separates a rake face and a clearance surface. The rake face preferably comprise chip breaking means in the form of one or more protrusions.

The cutting edge is spaced apart from all lines which are perpendicular to the interface plane and intersects the flat surface. The cutting edge preferably is part of a parting and grooving insert. The cutting edge preferably defines a width, which preferably is 1 - 15 mm, even more preferably 1.8 - 8.0 mm.

The parting and grooving tool is sutable for forming a groove in a metal work piece, were said groove has a width which is equal to a width of the cutting edge.

The mounting portion is a turret interface portion and may be designated a base portion. The mounting portion is suitable for connecting the tool holder to a tool station.

The projected portion is projecting or extending in a direction away from the mounting portion and away from the turret axis.

The projected portion and the mounting portion is permanently or detachably/releasably connected. If permanently connected, the projected portion and the mounting portion may form a singular body. If detachably/releasably connected, the projected portion and the mounting portion may be connected by connecting means, which may include one or more bolts, holes and/or threaded holes.

The flat surface is adapted for connection to a tool station of an indexable turret.

The interface between the tool station and the mounting portion can be in various configurations. For example, the mounting portion may be clamped to the tool station in accordance with what is shown and described in US 2017/0197252 A1, US 2014/0133903 A1 or US 2011/0023276 A1.

Said turret preferably comprises a front surface, an opposite rear surface and a peripheral surface connecting the front and rear surfaces.

The peripheral surface preferably comprises the tool stations. Alternatively, the front surface may comprise the tool stations.

Each tool station may preferably include a flat surface and an opening or a receiving bore. Each tool station may preferably comprise bolt holes. Said opening and/or bolt holes may radially penetrates through the flat surface and are preferably oriented perpendicular to the flat surface of the tool station.

The recess is a cavity or receiving seat for the parting and grooving tool. The recess may be a blade pocket. The parting and grooving tool can be inserted into the recess. The parting and grooving tool can be held or clamped in the recess, which may be achieved in various ways. For example, the tool holder may comprise a clamp (not shown) where the first or second side surface of the recess is part of said clamp. One or more screws or bolts can be used to press said clamp against the parting and grooving tool. The tool holder may comprise one or more threaded holes for said one or more screws or bolts. Such a solution is well known for holding a parting and grooving blade in a tool holder or a tool block, see e.g. US 10,052,693 B2. For such a solution, the overhang of the parting and grooving tool can be adjusted within a range. The parting and grooving tool may be clamped in the recess in other ways, such as by means of one or more screws or bolts, a threaded hole in the bottom surface of the recess and a through hole extending between the first and second surfaces, such as shown in EP2730356A1. Alternatively, the parting and grooving tool can be held in the recess by an interference fit, i.e. a press fit, or a friction fit. **In** such a case, the first and second side surfaces of the recess may be inclined, and third and the fourth surfaces of the parting and grooving tool may be inclined.

The parting and grooving tool is mounted or mountable in the recess such that the clamping portion or clamping portion end is inside or at least partly inside the recess, and such that the cutting portion or cutting portion end is outside or at least partly outside the recess. At least a portion of the clamping portion is in contact with at least a portion of the recess.

A shortest distance from the interface plane to the rear end surface of the parting and grooving tool is greater than a shortest distance from the interface plane to the cutting portion of the parting and grooving tool.

A distance between the opening of the recess to the interface plane is shorter than a distance from the rear end surface of the recess to the interface plane, where the interface plane comprising the flat surface. Said distances are measured perpendicular to a parting and grooving tool axis, which is a longitudinal axis of the parting and grooving tool.

The parting and grooving tool is preferably elongated along the parting and grooving tool axis.

The cutting portion of the parting and grooving tool is preferably elongated along the parting and grooving axis. In other words, a distance from a top surface of the parting and grooving tool to the tool holder is greater than than a distance from a third surface, facing towards the metal work piece, to a fourth surface, opposite said third surface.

The parting and grooving tool axis is inclined by an angle in relation to the interface plane. Said angle is preferably equal to or substantially equal to the predetermined angular spacing of the adjacent tool stations of the indexable turret.

According to an embodiment, the mounting portion comprises a hole pattern.

The tool holder is adapted for connection to a tool station formed on a peripheral surface of the turret.

Said hole pattern is a set of bolt holes for bolts.

Said hole pattern and said bolts are for connecting the tool holder to a tool station of an indexable turret.

Said tool holder is thus adapted for connection to a peripheral tool station which is a turret interface.

Said turret comprises a front surface, an opposite rear surface and a peripheral surface connecting the front and rear surfaces, wherein the peripheral surface comprises the tool stations.

Said tool holder is adapted for connecting to a tool station of a turret of a CNC-machine. Such tool station may various types of configuration with respect of e.g. bolt hole diameter, bolt hole thread type, size and shape of flat surface, spacing, position and number of bolt holes. The hole pattern of the mounting portion preferably correspond to or substantially corresponds to a hole pattern of a tool station of a turret. The hole pattern of mounting portion may correspond to a hole pattern the following turret interfaces from the following brands of CNC-machines: BT55A, BT65A, BT75A, BT85A from Doosan^{®} or Hwacheon^{®} or Hyundai Wia^{®}; GM40V from Gildemeister^{®}; MZ40V, MZ40X, MZ50V, MZ68A, MZ68B, MZ80A, MZ-F, MZ-A, MZ-B, MZ-C, MZ-D, MZ-E, MZ-F, MZ-G, MZ-H from Mazak^{®}; MS40A, MS60A, MS75A, MS110A, MS-A, MS-B, MS-C from Mori Seiki^{®}; NA55A, NA65A, NA75A from Nakamura^{®}; OK55A, OK60A, OK60B, OK60C, OK-A, OK-B, OK-E, OK-F from Okuma^{®}; DO-A, DO-B, DO-C from Doosan^{®}; MA-A, MA-B from Murata^{®}. The hole pattern of mounting portion may further correspond to a hole pattern according to VDI also known as DIN 69880 or ISO 10889.

The mounting portion of the tool holder preferably comprises an external surface. The external surface and the flat surface are preferably facing opposite or substantially opposite directions. Said bolt holes are preferably through holes intersecting the flat surface and the external surface of the mounting portion.

Said bolt holes are preferably oriented perpendicular to the flat surface of the mounting portion.

The mounting portion may comprise a shaft or a pin or boss part. Said shaft is arranged to be inserted into opening or receiving bore of the tool station. A cross section area of said shaft is smaller than a cross section area of the flat surface, where said cross section areas are in or parallel to the interface plane.

Said shaft extends from the flat surface in the opposite direction or substantially opposite direction relative to the projecting portion. Said shaft extends towards the rotational axis of the turret.

The tool station preferably is a peripheral tool station.

According to an embodiment, the parting and grooving tool comprises a parting and grooving blade and a parting and grooving insert,
wherein the parting and grooving blade comprises an insert seat for the parting and grooving insert,
wherein the parting and grooving blade comprises opposite first and second surfaces, opposite third and fourth surfaces and opposite top and rear surfaces,
wherein a blade width is defined as a shortest distance between the first and second surfaces;
wherein the parting and grooving insert comprises the cutting edge,
wherein the cutting edge defines an insert width,
wherein the parting and grooving insert comprises a rake face,
wherein the insert width is greater than the blade width.

Using an exchangeable parting and grooving insert give economical advantages, because only the insert needs to be replaced normally.

The parting and grooving tool may preferably be in accordance with the embodiment shown in Figs. 5-9 in EP 3357613 A1.

The top surface and the rake face are facing the same direction or substantially the same direction.

The rake face may preferably comprise chip breaking or chip forming means or a chip breaker, in the form of one or more depressions and/or protrusions.

A parting and grooving tool axis extends equidistantly or substantially equidistantly between the opposite third and fourth surfaces. Said parting and grooving tool axis is parallel with the opposite third and fourth surfaces.

The parting and grooving tool axis extends mid-way between the opposite first and second surfaces. Preferably, the opposite third and fourth surfaces are V-shaped in a cross section, where said cross section is in a plane perpendicular to the parting and grooving tool axis.

The parting and grooving tool may comprise more than one insert seat. For example, a further insert seat may be formed diagonally in relation to the above defined insert seat.

The parting and grooving tool is preferably elongated along a parting and grooving tool axis. In other words, a distance between opposite top and rear surfaces is greater, preferably 3-8 times greater-than a distance between the opposite third and fourth surfaces.

A distance between opposite top and rear surfaces is greater, preferably 15-150 times greater than a distance between the opposite first and second surfaces.

The parting and grooving tool axis is inclined by an angle in relationto the interface plane.

The tool holder may comprise positioning means, wherein said positioning means comprises a stop surface for being in contact with the rear surface of the parting and groovingtool, wherein the stop surface is moveable along or parallel to the parting and grooving tool axis.

Thereby the position or height of the cutting edge can be adjusted. The inventors have found that the position or height of the cuttingedge can affect tool life and/or chip breaking, and that exact position or height set by positioning means can compensate for manufacturing tolerances for the parting and grooving tool.

Said positioning means, i.e. a positioning mechanism, may comprise an adjustment screw for a stop member, wherein said stop member comprises a stop surface acting as a contact surface for the rear surface of the parting and grooving tool. Said positioning means allow accurate tool setup and repeatable replacement when removing and reinstalling a parting blade in the recess.

According to an embodiment, the recess comprises a rear end surface and an opposite opening, a first side surface, a second side surface and a bottom surface, wherein a portion of the third surface of the parting and grooving tool is in contact with a portion of the second side surface of the recess,
wherein a portion of the fourth surface is in contact with a portion of the first side surface of the recess.

According to an embodiment, the recess is offset in relation to the flat surface of the mounting portion.

Thereby the acessability is improved because there is less risk that the turret is interfering with the metal work piece.

The recess is offset in relation to the flat surface of the mounting portion means that the recess is spaced apart from all lines which is perpendicular to and intersect the flat surface of the mounting portion.

Formulated differently, in a rear view, where the flat surface of themounting portion is facing the viewer, the recess is spaced apart from the flat surface of the mounting portion.

A tool holder and a parting and grooving tool according to the invention may together with a turret provide a tool post for a lathe,
wherein the turret is rotatable around a turret axis,
wherein the turret comprises a plurality of tool stations,
wherein adjacent tool stations are spaced apart by a predetermined angle,
wherein the mounting portion of the tool holder is detachably releasably connected to a tool station of the turret,
wherein the cutting edge intersects a plane comprising an adjacent tool station and the turret axis.

The turret or revolver is a rotatable or indexable turret for a lathe which functions as a tool support, and preferably include 4-16 tool stations or holder attaching surfaces or turret positions, even more preferably 6-12 tool stations. In this context, the number of tool stations is for one revolutions. The turret may comprise more than one set of tool stations. The tool stations are preferably peripheral tool stations. The turret preferably forms a polygonal shape or substantially a polygonal shape in a side view, where the turret axis is towards the viewer. Said polygonal shape preferably comprise 4-16 corners, even more preferably 6-12 corners. The turret is indexable around the turret axis, such that any tool station can be positioned in an active position, i.e. facing a metal work piece to be machined.Said predetermined angular spacing α is preferably equal to 360° divided by the number of tool stations. Said predetermined angular spacing α is preferably 22.5°, 30°, 45°, 60° or 90°. Said predetermined angular spacing α is preferably 21° - 90°.

Each tool station functions as a mounting surface or a mountingseat for the tool holder, more specifically for the mounting portion of the tool holder. Each tool station preferably comprise a flat surface. Said flat surface is preferably formed on an outer peripheral surface of the turret. The interface plane comprises said flat surface. Said flat surface is preferably rectangular shaped or square shaped. Theflat surface of the mounting portion is in contact with and coplanar with the flat surface of a tool station. Each tool station preferably includes an opening or a receiving bore or insertion hole. Preferably, said opening is centrally positioned in or on the tool station.

Each tool station preferably comprise a hole pattern, or a set of bolt holes. Said hole pattern preferably correspond to a hole pattern of the mounting portion, and preferably comprise 2-8 bolt holes, even more preferably four bolt holes. Each of said bolt holes preferably comprise an internal thread. Said opening and/or bolt holes radially penetrates through the flat surface and are preferably oriented perpendicular to the flat surface of the tool station.

One tool station, adjacent to the tool station to which said tool holder is connected, is preferably empty. In other words, no cutting edge is connected to said tool post.

The predetermined angle separating adjacent tool stations may be equal to or substantially equal to an angle, where a parting and grooving tool axis is inclined by said angle in relation to the interface plane.

Thereby, a tangential cutting force is parallel to or substantially parallel to the parting and grooving tool axis, which give a reduced risk for vibrations.

Substantially equal should be understood as +/- 20°, even more preferably +/- 10°.

In other words, the parting and grooving tool axis is parallel to or substantially parallel to a plane comprising the adjacent tool station.

The cutting edge may intersect or substantially intersect a plane comprising a center point of the adjacent tool station and the turret axis.

Thereby, the tool life is increased.

The tool holder is preferably spaced apart from said plane. "Substantially intersects" means that the cutting edge is within +/-0.5mm from said plane.

The turret may comprise a front surface, an opposite rear surface and a peripheral surface connecting the front and rear surfaces, wherein the peripheral surface comprisesthe tool stations.

The peripheral surface is an outer circumference or an outer casing. The tool stations are peripheral tool stations.

The turret may comprise a front surface, an opposite rear surface and a peripheral surface connecting the front and rear surfaces, wherein the cutting edge is outside a volume limited by a plane comprising the front surface and a plane comprising the rear surface.

The cutting edge is thus outside, or spaced apart from, or off-set, in relation to the peripheral surface.

The projected portion may be spaced apart from a volume limited by a plane comprising the front surface and a plane comprising the rear surface.

Thereby, the accessability is improved. In other words, the risk of collision between the turret and the metal work piece is reduced.

The tool post may comprise coolant delivery means,
wherein said coolant delivery means is connected to a coolant outlet associated with the adjacent tool post,
wherein said coolant delivery means is connected to the tool holder or the parting and grooving tool.

Thereby the tool life and/or chip breaking is improved. Said coolant delivery means may include a tube or a pipe.

Said coolant delivery means is adapted to deliver coolant from a coolant outlet associated to the adjacent tool post, i.e. a tool post adjacent to the tool post to which the tool holder is connected. The coolant outlat may be formed in the tool station. Alternatively, the coolantoutlet may be formed in the front surface of the turret, adjacent to the adjacent tool station. The coolant delivery means may be connected to the tool holder, e.g. to a coolant inlet formed in a side surface of the tool holder. In such a case, the tool holder comprises a internal coolant channel. Alternatively, the coolant delivery means is connected to the first or second surface of the parting and grooving tool. Preferably, the parting and grooving tool comprises an internal coolant channel, adapted to direct coolant towards the cutting edge.

### DESCRIPTION OF THE DRAWINGS

The present invention will now be explained in more detail by a description of embodiments of the invention and by reference to the accompanying drawings.
Fig. 1 is a side view of a turret and a tool holder and a parting and grooving tool according to a first embodiment
Fig. 2 is a perspective view of the turret and a tool holder and a parting and grooving tool in Fig. 1
Fig. 3 is a further perspective view of the turret and a tool holder and a parting and grooving tool in Fig. 1
Fig. 4 is a side view of a turret and a tool holder and a partingand grooving tool according to a second embodiment and metal work piece
Fig. 5 is a perspective view of the turret and the tool holder and the parting and grooving tool in Fig. 4
Fig. 6 is a further perspective view of the turret and the tool holder and the parting and grooving tool in Fig. 4
Fig. 7 is a side view of the tool holder and the parting and grooving tool according in Fig. 4
Fig. 8 is a perspective view of the tool holder and the parting and grooving tool in Fig. 7
Fig. 9 is a further perspective view of the tool holder and the parting and grooving tool in Fig. 7
Fig. 10 is a side view of the tool holder in Fig. 7
Fig. 11 is a perspective view of the tool holder in Fig. 7
Fig. 12 is a further perspective view of the tool holder in Fig. 7
Fig. 13 is a top view of a tool station
Fig. 14 is a rear view of a mounting portion of a tool holder

### DETAILED DESCRIPTION OF EMBODIMENTS OF THE INVENTION

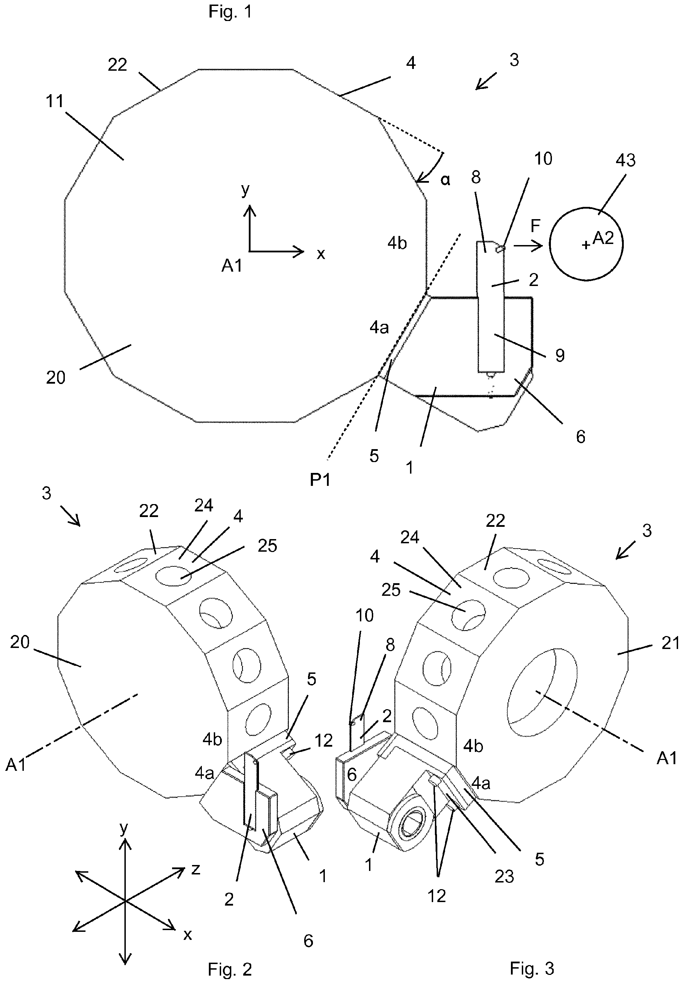

Reference is made to Figs. 1 - 3 which show tool post 3 for a CNC-lathe (not shown), comprising a tool holder 1 according to a first embodiment, a parting and grooving tool 2, and a turret 11. The turret 11 is rotatable around a turret axis A1. The turret 11 comprises a front surface 20, an opposite rear surface 21 and a peripheral surface 22 connecting the front and rear surfaces 20, 21. The turret 11 comprises a plurality of tool stations 4. Each tool station 4 comprises a flat surface 24, an opening 25, and a hole pattern (not shown). The tool stations are formed on the peripheral surface 22. The flat surfaces 24 of adjacent tool stations 4a, 4b are spaced apart by a predetermined angle α.

The tool holder 1 comprising a mounting portion 5 and a projected portion 6, projecting away from the turret axis A1. The mounting portion 5 comprises a flat surface 7 extending in an interface plane P1. The mounting portion 5 of the tool holder 1 is detachably connected to a tool station 4a. The adjacent tool station 4b is empty, i.e. no cutting tool is connected to the adjacent tool station 4b.

A metal work piece 43 is rotatable around a rotational axis A2, which is parallel to the turret axis A1.

The flat surface 24 of the tool station 4a to which the mounting portion 5 of the tool holder 1 is connected extends in said interface plane P1. The flat surface 24 of said tool station 4a is in contact with the flat surface 7 of the tool holder 1.

The projected portion 6 comprises a recess 13 for holding the parting and grooving tool 2.

The parting and grooving tool 2 is elongated and comprises a cutting portion 8, or a free end portion, and a clamping portion 9. The clamping portion 9 is inside the recess 13.

The parting and grooving tool 2 comprises a parting and grooving blade and a parting and grooving insert.

The cutting portion 9 comprises the parting and grooving insert. The parting and grooving insert comprises a cutting edge 10.

The cutting edge 10 is between the turret axis A1 and the rotational axis A2 of the metal work piece 43.

A longitudinal axis of the parting and grooving tool 2 is extending substantially parallel to a flat surface 24 of an adjacent station 4b to the tool station to which the mounting portion 5 of the tool holder 1 is connected.

As can be seen in Figs. 2 and 3, the cutting edge 10 and at least a portion of the projected portion 6 are outside a volume limited by a plane comprising the front surface 20 and a plane comprising the rear surface 21.

The CNC-lathe, more specifically the turret 11 is moveable in or around two, preferably three axis. Said axis are designated X, Y and Z, and are orthogonal. The turret 11 is rotatable around the Z axis, which is the turret axis A1. The turret can be set such that the X-axis intersects turret axis A1 and the rotational axis A2 of the metal work piece 43.

Cutting a groove in the metal work piece 43 is achieved by first rotating the tool post 3 including the turret 11 around the turret axis A1 such that a flat surface 24 of one tool station 4b is perpendicular to a shortest line between the turret axis A1 and the rotational axis A2, and such that the tool holder 1 is connected to an adjacent station 4a to the first mentioned tool station 4b. Secondly, the tool post 3 including the turret 11 is moved in a straight line in a feed direction F towards the rotational axis A2 such that a groove is formed in a metal work piece 43. The cutting edge 11 is active, i.e. cuts chips from the metal work piece 43. A groove can be formed which precedes a parting off operation, i.e. a piece of the metal work piece 43 is separated. The feed direction F is along the X-axis. The rotation of the metal work piece 43 is counter clock-wise in Fig. 1.

As seen in e.g. Fig. 1, the adjacent tool station 4b, which is in an active position, is counter-clock-wise in relation to the tool station 4a to which the tool holder 1 is connected, when the front surface 20 of the turret 11 is facing the viewer.

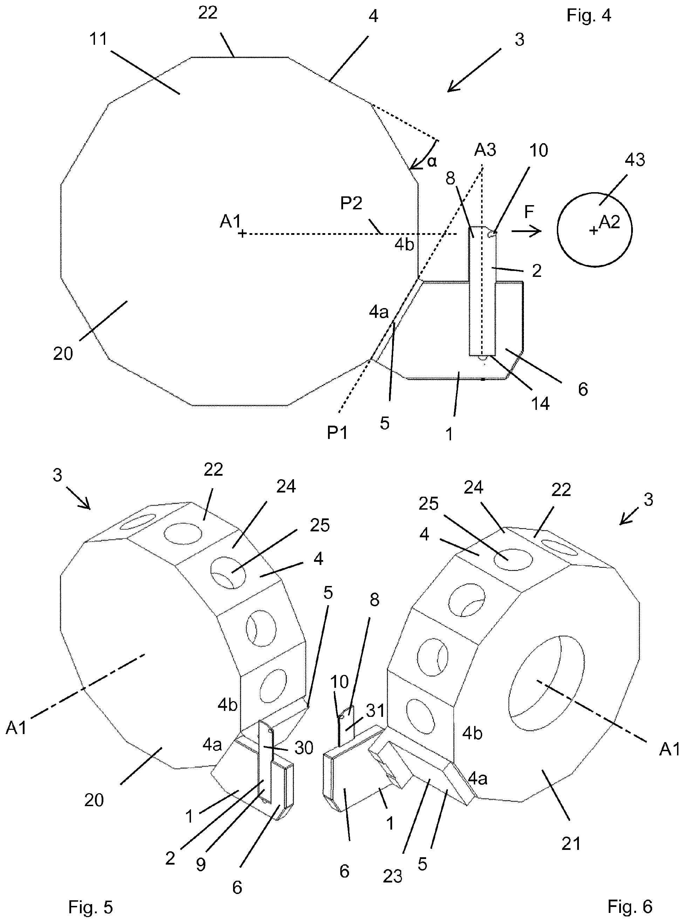

Reference is now made to Figs. 4 - 6 which show tool post 3, comprising a cutting tool 1 according to a second embodiment, a parting and grooving tool 2, and a turret 11. The parting and grooving tool 2 and the turret 11 is in accordance with the tool post 3 shown in Figs. 1 - 3. The only difference compared to Figs. 1 -3 is the shape of the tool holder 1. The tool holder 1 is connected to a tool station 4a. As can be seen in Fig. 4, the cutting edge 10 intersects or substantially intersects a plane P2 comprising an adjacent tool station 4b and the turret axis A1. More specifically, the cutting edge 10 intersects or substantially intersects a plane P2 comprising the turret axis A1 and rotational axis A2 of the metal work piece 43. A parting and grooving tool axis A3 is inclined in relation to the interface plane P1. The parting and grooving tool 2 is elongated along the parting and grooving tool axis A3.

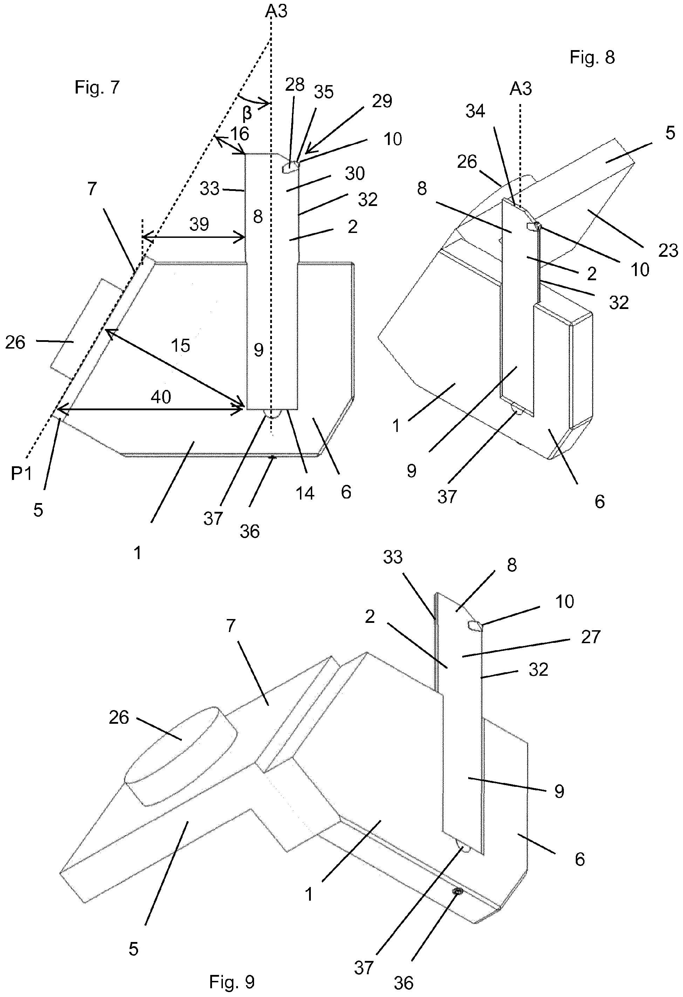

Reference is now made to Figs. 7 - 9 which show the cutting tool 1 according to the second embodiment and the parting and grooving tool 2 shown in Figs. 1 - 6. The parting and grooving tool 2 comprises a parting and grooving blade 27 and a parting and grooving insert 28. The parting and grooving blade 27 comprises an insert seat 29 for the parting and grooving insert 28. The parting and grooving blade 27 comprises opposite first and second surfaces 30, 31, opposite third and fourth surfaces 32, 33 and opposite top and rear surfaces 34, 14. The first and second surfaces 30, 31 are side surfaces. During cutting, the third surface 32 is facing towards the rotational axis A2. The parting and grooving insert 28 comprises a cutting edge 10 and a rake face 35,

The top surface 34 of the parting and grooving blade 27 and the rake face 35 are facing the same direction or substantially the same direction.

A parting and grooving tool axis A3 extends parallel to and equidistantly or substantially equidistantly between the opposite third and fourth surfaces 32, 33. The third and fourth surfaces 32, 33 are clamping surfaces. The parting and grooving tool axis A3 extends mid-way between the opposite first and second surfaces 30, 31.

The opposite third and fourth surfaces 32, 33 are V-shaped in a cross section, where said cross section is in a plane perpendicular to the parting and grooving tool axis A3.

The parting and grooving tool 2 is elongated along a parting and grooving tool axis A3. Thus, a distance between opposite top and rear surfaces 34, 14 is greater than a distance between the opposite third and fourth surfaces 32, 33.

As can be seen in Fig. 7, the parting and grooving tool axis A3 is inclined by an angle β in relation to the interface plane P1. A distance 15 from the interface plane P1 to the rear end surface 14 of the parting and grooving tool 2 is greater than a distance 16 from the interface plane P1 to the cutting portion 8 of the parting and grooving tool 2.

The mounting portion 5 of the tool holder 1 comprises a flat surface 7 and an external surface 23. The external surface 23 and the flat surface 7 are facing opposite or substantially opposite directions. Through holes in the form of bolt holes (not shown) intersects the flat surface 7 and the external surface 23 of the mounting portion 5. The mounting portion 5 further comprise a shaft 26.

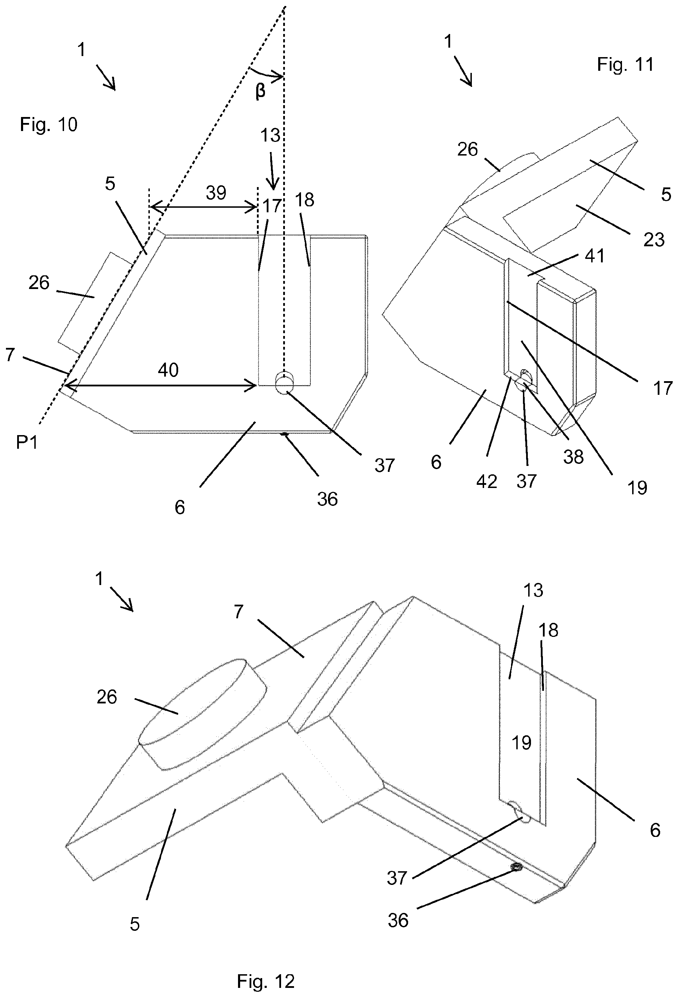

Reference is now made to Figs. 10 - 12 which show the tool holder 1 as previously described according to the second embodiment.

The recess 13 comprises first and second side surface 17, 18, a bottom surface 19 and a rear end surface 42. An opening 41 of the recess 13 is opposite the rear end surface 42. The first and second side surfaces 17, 18 of the recess 13 are inclined. In other words, an angle between the bottom surface 19 and the first and second side surface 17, 18, respectively, is acute.

As can be seen in Fig. 10, a shortest distance 39 between the opening 41 of the recess 13 to the interface plane P1 is shorter than a shortest distance 40 from the rear end surface 42 of the recess 13 to the interface plane P1, where the interface plane P1 comprising the flat surface 7. The recess 13, more specifically a line parallel to and mid-way between the first and second side surfaces 17, 18, is inclined in relation to the interface plane P1 by an angle β. Said angle β is preferably 22.5°, 30°, 45°, 60° or 90°. Said angle β is preferably 21° - 90°.

The tool holder 1 comprises positioning means 36, 37, i.e. a positioning mechanism, which comprise an adjustment screw 36 for a stop member 37. Said stop member 37 comprises a stop surface 38. Said stop member 37 intersect the rear end surface 42 and the bottom surface 19 of the recess 13. The distance between the opening 41 and the stop surface 38 is adjustable by means of the adjustment screw 36.

The mounting portion 5 comprises a hole pattern, i.e. a set of bolt holes (not shown).

The recess 13 is offset in relation to the flat surface 7 of the mounting portion 5.

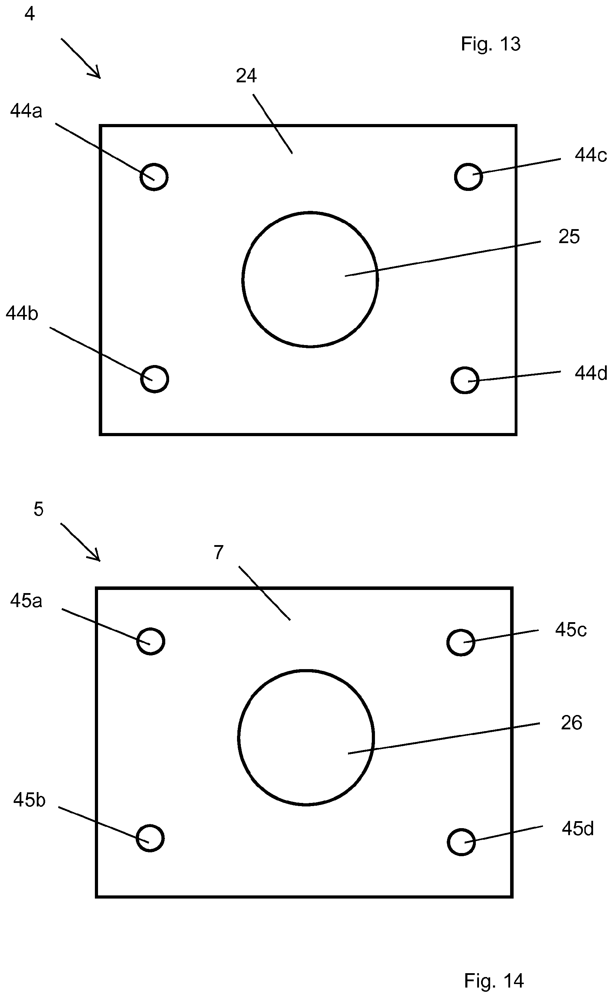

Reference is now made to Fig. 13 which show a tool station 4 in a top view. The tool stations 4, 4a, 4b in Figs. 1 - 6 may preferably be in accordance with the tool station 4 in Fig. 13. The tool station 4 comprises a flat surface 24, an opening 25, and a hole pattern 44a-d, i.e. a set of bolt holes 44a-d. Said opening 25 and bolt holes 44a-d are oriented perpendicular to the flat surface 24. Each of said bolt holes 44a-d comprises an internal thread (not shown), corresponding to an external thread of a bolt used for clamping a tool holder to the tool station.

Reference is now made to Fig. 14 which show a mounting portion 5 of a tool holder 1 in a rear view. The above described tool holders may preferably comprise a mounting portion in accordance with the mounting portion 5 in Fig. 14. The mounting portion 5 comprises a hole pattern 45a-d, i.e. a set of bolt holes 45a-d for bolts (not shown). Said bolt holes 45a-d are through holes intersecting the flat surface 7 and are oriented perpendicular to the flat surface 7. The mounting portion 5 comprise a shaft 26 or a pin or boss part, oriented perpendicular to the flat surface 7. The mounting portion 5 comprise a shaft 26 or a pin or boss part or a protrusion, arranged to be inserted into the opening 25 of the tool station 4 seen in Fig. 13. During mounting, the flat surface 7 is in contact with the flat surface of the tool station.

## Claims

1. A tool holder (1) and a parting and grooving tool (2) for an indexable turret (11) having a plurality of tool stations (4) where adjacent tool stations (4) having a predetermined angular spacing (a),
the tool holder (1) comprising:
a mounting portion (5) and a projected portion (6),
wherein the mounting portion (5) comprises a flat surface (7) defining an interface plane (P 1),
wherein the projected portion (6) comprises a recess (13) for holding the parting and grooving tool (2),
wherein the projected portion (6) and the mounting portion (5) are connected to each other,
wherein the parting and grooving tool (2) comprises:
a cutting portion (8) and a clamping portion (9),
wherein the cutting portion (8) comprises a parting and grooving insert (28) comprising a cutting edge (10), and
wherein the clamping portion (9) comprises a rear end surface (14),
**characterized in that** the parting and grooving tool (2) is mountable in the recess (13) such that a distance (15) from the interface plane (P1) to the rear end surface (14) of the parting and grooving tool (2) is greater than a distance (16) from the interface plane (P1) to the cutting portion (8) of the parting and grooving tool (2).

2. A tool holder (1) and a parting and grooving tool (2) according to claim 1,
wherein the mounting portion (5) comprises a hole pattern (45a-d).

3. A tool holder (1) and a parting and grooving tool (2) according toany of the preceding claims,
wherein the parting and grooving tool (2) comprises a parting and grooving blade (27) and a parting and grooving insert (28),
wherein the parting and grooving blade (27) comprises an insert seat (29) for the parting and grooving insert (28),
wherein the parting and grooving blade (27) comprises opposite first and second surfaces (30, 31), opposite third and fourth surfaces (32, 33) and opposite top and rear surfaces (34, 14),
wherein a blade width is defined as a shortest distance between the first and second surfaces (30, 31);
wherein the parting and grooving insert (28) comprises the cutting edge (10),
wherein the cutting edge (10) defines an insert width,
wherein the parting and grooving insert (28) comprises a rake face (35),
wherein the insert width is greater than the blade width.

4. A tool holder (1) and a parting and grooving tool (2) according to any of the preceding claims,
wherein the recess (13) comprises a rear end surface (42) and an opposite opening (41), a first side surface (17), a second side surface (18) and a bottom surface (19),
wherein a portion of the third surface (32) of the parting and grooving tool (2) is in contact with a portion of the second side surface (18) of the recess (13),
wherein a portion of the fourth surface (33) is in contact with a portion of the first side surface (17) of the recess (13).

5. A tool holder (1) and a parting and grooving tool (2) according to any of the preceding claims,
wherein the recess (13) is offset in relation to the flat surface (7) of the mounting portion (5).

## Patentansprüche

1. Werkzeughalter (1) und ein Abstech- und Einstechwerkzeug (2) für einen indexierbaren Revolver (11), der eine Mehrzahl von Werkzeugstationen (4) aufweist, wobei benachbarte Werkzeugstationen (4) einen vorbestimmten Winkelabstand (α) aufweisen,
wobei der Werkzeughalter (1) aufweist:
einen Befestigungsabschnitt (5) und einen vorstehenden Abschnitt (6),
wobei der Befestigungsabschnitt (5) eine ebene Fläche (7) aufweist, die eine Schnittstellenebene (P1) definiert,
wobei der vorstehende Abschnitt (6) eine Ausnehmung (13) zum Halten des Abstech- und Einstechwerkzeugs (2) aufweist,
wobei der vorstehende Abschnitt (6) und der Befestigungsabschnitt (5) miteinander verbunden sind,
wobei das Abstech- und Einstechwerkzeug (2) aufweist:
einen Schneidabschnitt (8) und einen Klemmabschnitt (9),
wobei der Schneidabschnitt (8) einen Abstech- und Einstechschneideinsatz (28) aufweist, der eine Schneidkante (10) aufweist, und
wobei der Klemmabschnitt (9) eine hintere Endfläche (14) aufweist,
**dadurch gekennzeichnet, dass** das Abstech- und Einstechwerkzeug (2) in der Ausnehmung (13) derart montierbar ist, dass ein Abstand (15) von der Schnittstellenebene (P1) zu der hinteren Endfläche (14) des Abstech- und Einstechwerkzeugs (2) größer ist als ein Abstand (16) von der Schnittstellenebene (P1) zu dem Schneidabschnitt (8) des Abstech- und Einstechwerkzeugs (2).

2. Werkzeughalter (1) und ein Abstech- und Einstechwerkzeug (2) nach Anspruch 1,
wobei der Befestigungsabschnitt (5) ein Lochmuster (45a-d) aufweist.

3. Werkzeughalter (1) und ein Abstech- und Einstechwerkzeug (2) nach einem der vorhergehenden Ansprüche,
wobei das Abstech- und Einstechwerkzeug (2) eine Abstech- und Einstechklinge (27) und einen Abstech- und Einstechschneideinsatz (28) aufweist,
wobei die Abstech- und Einstechklinge (27) einen Schneideinsatzsitz (29) für den Abstech- und Einstechschneideinsatz (28) aufweist,
wobei die Abstech- und Einstechklinge (27) gegenüberliegende erste und zweite Flächen (30, 31), gegenüberliegende dritte und vierte Flächen (32, 33) und gegenüberliegende obere und hintere Flächen (34, 14) aufweist,
wobei eine Klingenbreite als ein kürzester Abstand zwischen der ersten und zweiten Fläche (30, 31) definiert ist;
wobei der Abstech- und Einstechschneideinsatz (28) die Schneidkante (10) aufweist, wobei die Schneidkante (10) eine Schneideinsatzbreite definiert,
wobei der Abstech- und Einstechschneideinsatz (28) eine Spanfläche (35) aufweist, wobei die Schneideinsatzbreite größer als die Klingenbreite ist.

4. Werkzeughalter (1) und ein Abstech- und Einstechwerkzeug (2) nach einem der vorhergehenden Ansprüche,
wobei die Ausnehmung (13) eine hintere Endfläche (42) und eine gegenüberliegende Öffnung (41), eine erste Seitenfläche (17), eine zweite Seitenfläche (18) und eine Bodenfläche (19) aufweist,
wobei ein Abschnitt der dritten Fläche (32) des Abstech- und Einstechwerkzeugs (2) mit einem Abschnitt der zweiten Seitenfläche (18) der Ausnehmung (13) in Kontakt steht,
wobei ein Abschnitt der vierten Fläche (33) mit einem Abschnitt der ersten Seitenfläche (17) der Ausnehmung (13) in Kontakt steht.

5. Werkzeughalter (1) und ein Abstech- und Einstechwerkzeug (2) nach einem der vorhergehenden Ansprüche,
wobei die Ausnehmung (13) in Bezug auf die ebene Fläche (7) des Befestigungsabschnitts (5) versetzt ist.

## Revendications

1. Porte-outil (1) et outil de tronçonnage et de rainurage (2) pour une tourelle indexable (11) comprenant une pluralité de postes d'outil (4), les postes d'outil (4) adjacents présentant un espacement angulaire (α) prédéterminé,
le porte-outil (1) comprenant :
une partie de montage (5) et une partie saillante (6),
dans lequel la partie de montage (5) comprend une surface plane (7) définissant un plan d'interface (P1),
dans lequel la partie saillante (6) comprend un logement (13) pour recevoir l'outil de tronçonnage et de rainurage (2),
dans lequel la partie saillante (6) et la partie de montage (5) sont reliées l'une à l'autre,
dans lequel l'outil de tronçonnage et de rainurage (2) comprend :
une partie de coupe (8) et une partie de serrage (9),
dans lequel la partie de coupe (8) comprend une plaquette de tronçonnage et de rainurage (28) comprenant une arête de coupe (10), et
dans lequel la partie de serrage (9) comprend une surface d'extrémité arrière (14),
**caractérisé en ce que** l'outil de tronçonnage et de rainurage (2) est montable dans le logement (13) de sorte qu'une distance (15) du plan d'interface (P1) à la surface d'extrémité arrière (14) de l'outil de tronçonnage et de rainurage (2) est supérieure à une distance (16) du plan d'interface (P1) à la partie de coupe (8) de l'outil de tronçonnage et de rainurage (2).

2. Porte-outil (1) et outil de tronçonnage et de rainurage (2) selon la revendication 1,
dans lequel la partie de montage (5) comprend un motif d'alésage (45a-d).

3. Porte-outil (1) et outil de tronçonnage et de rainurage (2) selon l'une quelconque des revendications précédentes,
dans lequel l'outil de tronçonnage et de rainurage (2) comprend une lame de tronçonnage et de rainurage (27) et une plaquette de tronçonnage et de rainurage (28),
dans lequel la lame de tronçonnage et de rainurage (27) comprend un logement de plaquette (29) pour la plaquette de tronçonnage et de rainurage (28),
dans lequel la lame de tronçonnage et de rainurage (27) comprend des première et seconde surfaces opposées (30, 31), des troisième et quatrième surfaces opposées (32, 33) et des surfaces supérieure et arrière opposées (34, 14),
dans lequel une largeur de lame est définie comme une distance la plus courte entre les première et seconde surfaces (30, 31),
dans lequel la plaquette de tronçonnage et de rainurage (28) comprend l'arête de coupe (10), dans lequel l'arête de coupe (10) définit une largeur de plaquette,
dans lequel la plaquette de tronçonnage et de rainurage (28) comprend une face de coupe (35), dans lequel la largeur de plaquette est supérieure à la largeur de lame.

4. Porte-outil (1) et outil de tronçonnage et de rainurage (2) selon l'une quelconque des revendications précédentes,
dans lequel le logement (13) comprend une surface d'extrémité arrière (42) et une ouverture opposée (41), une première surface latérale (17), une seconde surface latérale (18) et une surface inférieure (19),
dans lequel une portion de la troisième surface (32) de l'outil de tronçonnage et de rainurage (2) est en contact avec une portion de la seconde surface latérale (18) du logement (13),
dans lequel une portion de la quatrième surface (33) est en contact avec une portion de la première surface latérale (17) du logement (13).

5. Porte-outil (1) et outil de tronçonnage et de rainurage (2) selon l'une quelconque des revendications précédentes,
dans lequel le logement (13) est décalé par rapport à la surface plane (7) de la partie de montage (5).
